# EUROPEAN PATENT APPLICATION

(11) **EP 4 729 806 A1**
(43) Date of publication of application: **22.04.2026**
(21) Application number: 25205154.5
(22) Date of filing: 27.09.2025
(51) Int. Cl.: F16H 48/20, F16H 48/32, F16H 48/34, B60K 17/34, F16H 63/50

(54) **CONTROLLER FOR CONTROLLING A DIFFERENTIAL LOCK SYSTEM, DIFFERENTIAL LOCK SYSTEM AND AXLE ASSEMBLY**

(30) Priority: 15.10.2024 US 202418916588
(71) Applicant: ArvinMeritor Technology, LLC, Troy, MI 48084 (US)
(72) Inventor: Kwasniewski, Dale, Brighton, 48116 (US); Andreassa Guedes Cezar, Fabio, Rochester Hills, 48306 (US)
(74) Representative: Whitfield, Jack Stephen

(57) **Abstract**

Aspects of the present invention relate to a controller for controlling a differential lock system of a vehicle with a plurality of wheels. The controller comprises one or more processors collectively configured to receive a wheel status information specific to at least two wheels. Further, it is configured to determine, based at least on the wheel status information, a differential lock setpoint, indicating whether a differential lock should be engaged or disengaged. Also, it is configured to output the differential lock setpoint to the differential lock system to control the differential lock system to engage or disengage the differential lock based on the differential lock setpoint. The invention further relates to a differential lock system, an axle assembly, a method and computer readable instructions.

## Description

### Technical Field

This application claims the benefit of priority under 35 U.S.C. § 119(e) to U.S. Provisional Application No. 18/916588 filed on October 15, 2024, and titled "Controller for controlling a differential lock system, differential lock system, axle assembly, method and computer readable instructions", the entire disclosure of which is hereby incorporated by reference in its entirety. The present disclosure relates to a controller for controlling a differential lock system. Aspects of the invention relate to a differential lock system, an axle assembly, a method and computer readable instructions.

### Background

Currently, these systems require the vehicle operator to interface with the in cab manual dash switches to actuate these shift systems. Historically, extensive driver training has been required on the proper use of these systems to prevent damage to the drive axle components due to inappropriate use by the driver.

A locking differential can be thought of as a mechanical component typically used in vehicles to overcome the limitation of a standard open differential by locking both wheels on an axle together as if on a common shaft. This forces both wheels to turn in unison, which is particularly useful when one of the wheels lacks traction.

While locking differentials can effectively overcome this limitation, it can be difficult for the user to use the most favorable type of differential in a given situation.

The present invention aims to provide one or more improvements over the prior art. In particular, the present invention seeks to provide a control for controlling a differential lock system, a differential lock system, an axle assembly, a method and computer readable instructions with improved performance and accessibility.

### Summary of Invention

Aspects and embodiments of the invention provide a control for controlling a differential lock system, a differential lock system, an axle assembly, a method and computer readable instructions as claimed in the appended claims.

According to an aspect of the present invention, a control for controlling a differential lock system of a vehicle with a plurality of wheels is provided.

The controller comprises one or more processors collectively configured to receive a wheel status information specific to at least two wheels, determine, based at least on the wheel status information, a differential lock setpoint, indicating whether a differential lock should be engaged or disengaged, output the differential lock setpoint to the differential lock system to control the differential lock system to engage or disengage the differential lock based on the differential lock setpoint.

A controller according to the invention allows to determine and output the optimal setting for a differential lock. This way, a driver can either adjust the differential lock according to the optimal setting without going through training or the differential lock can be set automatically according to the setpoint.

A differential lock may be understood as a mechanical component that is configured to either lock a differential, which results in both wheels or another rotating element to rotate on an axle together as if on a common shaft. Alternatively or in addition, the differential lock may be understood as an inter-axle differential lock that is configured to transmit torque equally on two or more axles when in the locked state.

A controller may be understood as a device that is configured to at least inform, direct, or regulate the behavior of other devices or systems. A controller may at least operate under the control of a stored program, may be configured to execute an algorithm, or may be programmable by a user. A controller may receive inputs at least from a user, a sensor, or other devices, and may provide outputs to other devices based on these inputs.

A wheel status information may refer to an information that is specific to a current property of at least two wheels. The wheel status information may comprise information specific to at least a pair of wheels on one axle, all wheels of the vehicle or at least all wheels controlled by a differential lock system.

A differential setpoint may be understood as a state in which the differential lock should be according to the wheel status information. The differential setpoint may be independent of the present state of the differential lock. An algorithm may be used to determine the differential setpoint. The algorithm may be configured to determine a setpoint that corresponds at least to minimum wear of the tires, a maximum of traction of the wheels, or a combination thereof.

Outputting may be understood as an act of transmitting, conveying, or otherwise making available the determined setpoint of the differential lock. This act may involve various forms of signal transmission, data communication, or control instruction delivery, and may be carried out at least through wired or wireless means, digital or analog methods, or via any suitable communication protocol or standard. The setpoint may be output continuously, periodically, or based on certain conditions or events.

Optionally, the wheel status information comprises a wheel speed and/or determining the differential lock setpoint comprises comparing the speed of two wheels.

Advantageously, the wheel speed may be accessed by a wheel speed sensor, in particular an anti-lock braking system (ABS) sensor. This way, the differential lock setpoint can be determined efficiently. Comparing the speed of two wheels for determining the setpoint is quick and reliable. The wheel speed sensor may be configured as a stand-alone sensor, in particular independent of an ABS-sensor.

Optionally, the one or more processors are collectively configured to receive a vehicle status information and determining the differential lock setpoint is based at least on the wheel status information and the vehicle status information.

A vehicle status information may render the determination of the differential lock setpoint more reliable.

Optionally, the vehicle status information comprises at least a vehicle speed, a steering angle, an inclination, a brake status or a clutch status.

All the above-mentioned variables, alone or in combination, may comprise information that make the determination of the differential lock setpoint more reliable. It may be provided that if the algorithm cannot determine a clear result for the differential lock setpoint or the uncertainty is high, at least the vehicle status information is consulted, or more information is retrieved for the vehicle status information in the form of the variables mentioned above.

Optionally, the one or more processors are collectively configured to receive a status of the differential lock system, wherein the status of the differential lock system at least comprises whether the differential lock is engaged or disengaged.

This way, the status of the differential lock can be taken into consideration when determining the differential lock setpoint, making the determination more robust. The status of the differential lock system may comprise a duration of an engagement or disengagement of the differential lock. This information may be used advantageously in combination with the wheel status information and/or the vehicle status information.

Optionally, the one or more processors are collectively configured to output at least an engine brake or master clutch setpoint.

Controlling the engine braking and/or master clutch may improve the synchronization f the differential lock clutch, resulting in an enhanced stability and control of the vehicle.

Optionally, the engine brake or master clutch setpoint is at least based on the vehicle status information.

Optionally, the one or more processors are further collectively configured to output the differential lock setpoint to an indicator.

By indicating the differential lock setpoint, a driver may adjust the differential lock accordingly or may notice that the vehicle engaged or disengaged the differential lock according to the setpoint and then chose whether or not to follow this suggestion.

According to another aspect of the invention, there is provided a differential lock system comprising a controller according to the invention and an actuator configured to engage or disengage the differential lock based on the differential lock setpoint.

A differential lock system according to the invention allows to determine and output the optimal setting for a differential lock. This way, a driver can either adjust the differential lock according to the optimal setting without going through training or the differential lock can be set automatically according to the setpoint.

Optionally, the actuator is a valve. Optionally, the valve is configured as at least one of a solenoid valve, a motor driven valve or a medium driven valve.

A solenoid valve offers the advantage of rapid response times and high cycling rates due to its electromagnetic actuation mechanism. A motor-driven valve provides precise control overflow rates and positions. A medium-driven valve, on the other hand, utilizes the pressure or flow of the medium itself for actuation, offering the benefit of self-operation without the need for an external power source.

Optionally, the actuator and the controller are formed as an assembly or separately.

Forming an actuator and a controller as an assembly offers the advantage of compactness and ease of installation, as it eliminates the need for separate mounting and wiring, thereby reducing the complexity of the system. Having the actuator and controller formed separately provides flexibility in system design and maintenance, as it allows for individual replacement or upgrade of either component without disturbing the other, potentially leading to cost savings and improved system adaptability.

Optionally, the actuator is connected to a housing of the differential lock.

This arrangement minimizes the distance and potential obstructions between the actuator and the differential lock, thereby reducing the response time and enhancing the precision of the lock activation.

Optionally, the actuator is arranged on an outer surface of the housing of the differential lock.

Optionally, the valve is a solenoid valve is arranged on a front axle carrier housing or a rear axle carrier housing, wherein the solenoid valve controls both the front axle differential lock and the rear axle differential lock, preferably via air pressure.

A valve that controls both the front and rear axle differential locks, preferably via air pressure, allows for coordinated control of both axles, optimizing vehicle performance across a wide range of driving conditions. It reduces the amount of required parts and thereby cost for installation and maintenance.

Optionally, the actuator is arranged on the differential lock.

This arrangement minimizes the distance and potential obstructions between the actuator and the differential lock, thereby reducing the response time and enhancing the precision of the lock activation.

Optionally, a bus, preferably a CAN bus, is connected to the controller to transmit the wheel status information.

Connecting a bus, preferably a CAN bus, to the controller controlling the differential locking system offers the advantage of real-time and efficient transmission of vehicle status information, particularly the wheel speed. This setup allows for immediate and precise adjustments to the differential lock based on the wheel speed data, enhancing vehicle stability and performance. The use of the CAN bus, known for its robustness and error detection capabilities, ensures reliable data communication, contributing to the overall safety and efficiency of the vehicle's drivetrain system.

According to yet another aspect of the invention, there is provided an axle assembly comprising a differential lock system according to the invention or a controller according to the invention.

An axle assembly according to the invention allows to determine and output the optimal setting for a differential lock. This way, a driver can either adjust the differential lock according to the optimal setting without going through training or the differential lock can be set automatically according to the setpoint.

According to a further aspect of the invention, there is provided a method for controlling a differential lock system of a vehicle, the method comprising receiving a wheel status information specific to at least two wheels, determining, based at least on the wheel status information, a differential lock setpoint, indicating whether a differential lock should be engaged or disengaged, outputting the differential lock setpoint to the differential lock system to control the differential lock system to engage or disengage the differential lock based on the differential lock setpoint.

A method according to the invention allows to determine and output the optimal setting for a differential lock. This way, a driver can either adjust the differential lock according to the optimal setting without going through training or the differential lock can be set automatically according to the setpoint.

According to a still further aspect of the invention, there are provided computer readable instructions which, when executed by a computer, are arranged to perform a method according to the invention.

Computer readable instructions according to the invention allow to determine and output the optimal setting for a differential lock. This way, a driver can either adjust the differential lock according to the optimal setting without going through training or the differential lock can be set automatically according to the setpoint.

According to a still further aspect of the invention, there is provided a computer program which, when the program is executed by a computer, cause the computer to carry out an inventive method.

A computer program according to the invention allows to determine and output the optimal setting for a differential lock. This way, a driver can either adjust the differential lock according to the optimal setting without going through training or the differential lock can be set automatically according to the setpoint.

According to a still further aspect of the invention, there is provided a computer-readable medium having stored thereon a computer program product according to the invention.

A computer-readable medium according to the invention allows to determine and output the optimal setting for a differential lock. This way, a driver can either adjust the differential lock according to the optimal setting without going through training or the differential lock can be set automatically according to the setpoint.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### Brief Description of Drawings

One or more embodiments of the invention will now be described, by way of example only, with reference to the accompanying drawings, in which:
Figure 1 is a top view of a controller, a differential lock system and an axle assembly according to an embodiment of the invention;
Figure 2 is a schematic overview, showing a controller;
Figure 3 is another schematic overview, showing a controller;
Figure 4 is a perspective view of a controller and a valve; and
Figure 5 is an overview of a method according to an embodiment of the invention.

### Detailed Description

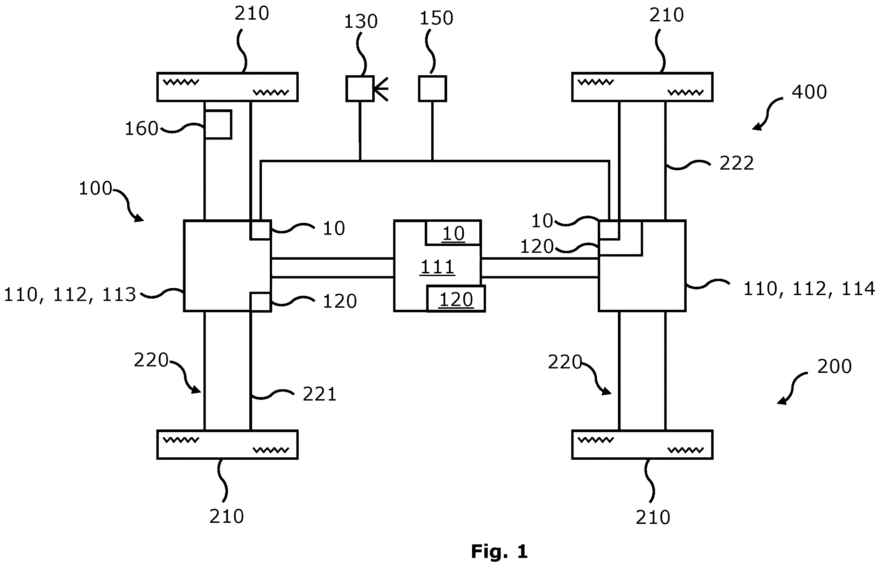

Fig. 1 illustrates an aspect of the present invention, a control 10 for controlling a differential lock system 100 of a vehicle 200 with a plurality of wheels 210.

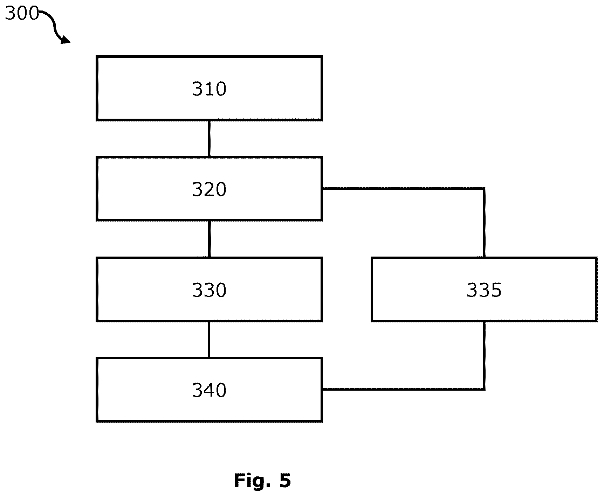

As shown in Fig. 5, the controller 10 comprises one or more processors collectively configured to receive 310 a wheel status information specific to at least two wheels 210, determine 320, based at least on the wheel status information, a differential lock setpoint, indicating whether a differential lock should be engaged or disengaged, and output 330 the differential lock setpoint to the differential lock system 100 to control the differential lock system 100 to engage or disengage the differential lock 110 based on the differential lock setpoint.

A differential lock 110 may be understood as a mechanical component that is configured to either lock a differential, which results in both wheels 210 or another rotating element on an axle 220 to rotate together as if on a common shaft. Alternatively, or in addition, the differential lock 110 may be understood as an inter-axle differential lock 111 that is configured to transmit speed equally on two or more axles when in the locked state. This is shown in Fig. 1. Further, it is illustrated that the differential lock 110 can be configured as an axle differential lock 112, in particular a front axis differential lock 113 and/or a rear axis differential lock 114.

The controller 10 may be arranged at various positions within a vehicle 200. The vehicle 200 may be any kind of vehicle with at least two wheels 210. Fig. 1 shows a vehicle 200 with four wheels 210, which are connected via two axles 220, a front axle 221 and a rear axle 222. Of course, the vehicle 200 may have more than four wheels 210, such as six wheels 210 or eight wheels 210. Each wheel 210 may be driven by a torque source or not, and each wheel 210 may be steerable or not.

The vehicle 200 may include a propulsion system or torque source, which can be any system capable of providing a force to move the vehicle, including but not limited to, a pedal mechanism, an internal combustion engine, an electric motor, or a combination thereof. The vehicle 200 may also include additional components such as a steering mechanism, a braking system, a seating arrangement, storage compartments, or any other components that enhance the functionality, comfort or safety of the vehicle. The vehicle 200 can be used in a variety of environments and for a multitude of purposes, including transportation, recreation, sport, or any other suitable application. In particular, the vehicle 200 may be configured as a commercial vehicle, in particular a truck or lorry. The specific configuration, size, shape, and materials of the vehicle 200 can vary widely to accommodate different use cases, user preferences, and regulatory requirements. The vehicle 200 is designed to be robust, efficient, and easy to use and maintain.

A controller 10 is configured to determine 320 and output 330 the optimal setting for a differential lock 110. This way, a driver can either adjust the differential lock 110 according to the optimal setting without going through training or the differential lock 110 can be set automatically according to the setpoint.

A controller 10 may be understood as a device that is configured to at least inform, direct, or regulate the behavior of other devices or systems. A controller 10 may at least operate under the control of a stored program, may be configured to execute an algorithm, or may be programmable by a user. A controller 10 may receive inputs at least from a user, a sensor such as a wheel speed sensor 160, or other devices, and may provide outputs to other devices based on these inputs.

Wheel status information may refer to information that is specific to a current property of at least two wheels 210. The wheel status information may comprise information specific to at least a pair of wheels 210 on one axle 220, all wheels 210 of the vehicle 200 or at least all wheels 210 controlled by a differential system 100.

A differential setpoint may be understood as a state in which the differential lock 210 should be according to the wheel status information. The differential setpoint may be independent of the present state of the differential lock 110. An algorithm may be used to determine the differential setpoint. The algorithm may be configured to determine a setpoint that corresponds at least to minimum wear of the tires, a maximum of traction of the wheels 210, or a combination thereof.

The process of determining 320 may be executed by an algorithm, which can involve a comparison of a given value with a predetermined threshold. The algorithm may be implemented in software, hardware, or a combination thereof, and may involve a variety of computational or logical operations. The determination may result at least in a binary outcome (e.g., above or below the threshold, engagement or disengagement of the differential lock) or a quantitative outcome (e.g., the degree to which the value exceeds the threshold or a certainty with which the differential should be engaged or disengaged). The specific method of determination, including the algorithm and the threshold, may vary widely depending on the application, the available data, the desired accuracy, and other factors.

For example, the differential setpoint may be determined by comparing the difference of the speeds of the at least two wheels with a threshold. For example, if the wheel speed difference is above a certain limit, for example 20 rpm, then the differential lock setpoint may be engaged.

Also, a machine learning algorithm may be utilized to determine 320 the setpoint for the differential lock 110 based on the wheel status information. The machine learning algorithm may be trained on a dataset comprising various wheel status parameters, including the wheel speed, and corresponding optimal differential lock setpoints. The training process may involve learning the complex relationships between these parameters and the optimal setpoint. Once trained, the algorithm may predict the optimal setpoint for a differential lock 110 given the wheel status information in real-time. This approach allows for dynamic adjustment of the differential lock 110, enhancing vehicle performance and safety.

Outputting 330 may be understood as an act of transmitting, conveying, or otherwise making available the determined setpoint of the differential lock 110. This act may involve various forms of signal transmission, data communication, or control instruction delivery, and may be carried out at least through wired or wireless means, digital or analog methods, or via any suitable communication protocol or standard. The setpoint may be output continuously, periodically, or based on certain conditions or events.

Further, the differential setpoint may be used to control the differential control lock 110. The control may be automatic, manual, or may provide an option for a manual override of the determined differential control lock setpoint.

Optionally, the wheel status information comprises a wheel speed and/or determining the differential lock setpoint comprises comparing the speed of two wheels 210.

Advantageously, the wheel speed may be accessed by a wheel speed sensor 160, in particular an anti-lock braking system (ABS) sensor. Fig. 1 shows one sensor 160 for the right front wheel 210. There may be at least one sensor 160 for each wheel 210 on one axle 220 in order to compare the determined wheel speeds from the same type of sensor. With a wheel speed sensor 160, the differential lock setpoint can be determined efficiently. Comparing the speed of two wheels 210 for determining the setpoint is quick and reliable.

Optionally, the one or more processors are collectively configured to receive vehicle status information and determining the differential lock setpoint is based at least on the wheel status information and the vehicle status information.

Vehicle status information, which is described in more detail in the following paragraphs, may render the determination of the differential lock setpoint more reliable.

Optionally, the vehicle status information comprises at least a vehicle speed, a steering angle, an inclination, a brake status or a clutch status.

All the above-mentioned variables, alone or in combination, may comprise information that make the determination of the differential lock setpoint more reliable. It may be provided that if the algorithm cannot determine a clear result for the differential lock setpoint or the uncertainty is high, at least the vehicle status information is consulted, or more information is retrieved for the vehicle status information in the form of the variables mentioned above.

It may be provided that the differential lock setpoint will be determined based on threshold values for at least one of the vehicle speed, a steering angle, an inclination, a brake status or a clutch status. For example, the differential lock setpoint may always be disengaged when the vehicle speed is above a threshold, in particular above 30 mph.

The vehicle status information may include further variables, which have at least an indirect effect on the wheels 210. This could e.g. be a temperature of an environment of the vehicle 200, which could affect the traction that a tire has on a road. Another example would be a road condition, which could at least be measured by a sensor (e.g. by a shock absorber) or retrieved from a digital map.

A machine learning algorithm may be employed to determine the differential lock setpoint based on both wheel status information and the vehicle status information, which may include at least the vehicle speed, the steering angle, the inclination, the brake status, or the clutch status. The algorithm may be trained on a dataset that includes at least one of these parameters and their corresponding optimal differential lock setpoints. The training enables the algorithm to learn the intricate relationships between these parameters and the optimal differential lock setpoint. Once trained, the algorithm can predict the optimal setpoint for a differential lock 110 given real-time wheel and vehicle status information. This allows for dynamic and responsive adjustment of the differential lock 110, thereby improving vehicle performance and safety under varying conditions.

Optionally, the one or more processors are collectively configured to receive a status of the differential lock system 100, wherein the status of the differential lock system 100 at least comprises whether the differential lock 110 is engaged or disengaged.

This way, the status of the differential lock 110 can be taken into consideration when determining the differential lock setpoint, making the determination more robust. The status of the differential lock system 100 may comprise a duration of an engagement or disengagement of the differential lock 110. This information may be used advantageously in combination with the wheel status information and/or the vehicle status information.

To determine the duration of an engagement or disengagement of the differential lock 110, it may be provided that a timer is started as soon as the differential lock 110 switches its status.

Optionally, the one or more processors are collectively configured to output an engine brake or master clutch setpoint.

The engine brake setpoint may include whether to engage or disengage an engine brake of an engine brake system. The engine brake system may operate by creating a force that opposes the rotation of the engine's crankshaft, thereby reducing the speed of the vehicle 200. This can be achieved through various methods, including but not limited to, ceasing fuel injection, reducing or stopping exhaust air flow, activating a compression release brake or activating regenerative braking. Generally, the engine brake system may be activated manually by the vehicle operator or automatically based on certain conditions such as vehicle speed, engine RPM, brake pedal application, or any other relevant parameters.

At least the engine brake or the transmission output torque may be configured to synchronize the speed of the clutch and a case of the differential. Synchronize may be understood as aligning the RPM of the clutch and differential case by applying a torque of at least through the transmission or the engine brake.

Controlling the engine braking along with the differential may enhance stability and control of the vehicle 200.

Optionally, the engine brake setpoint is at least based on the vehicle status information.

A vehicle status information may render the determination of the engine brake setpoint more reliable.

Optionally, the one or more processors are further collectively configured to output 340 the differential lock setpoint to an indicator 130.

By indicating the differential lock setpoint, a driver may adjust the differential lock 110 accordingly or may notice that the vehicle 200 engaged or disengaged the differential lock 110 according to the setpoint and then chose whether or not to follow this suggestion.

Indicator 130 may be configured as a visual, auditory, or haptic indicator 130. Fig. 1 shows a visual indicator 130 which may have the form of a lamp. Further, the indicator 130 may be an indication in a multimedia display of the vehicle 200 or shown in a head up display.

There may be one indicator 130 for each differential lock 110 or a single indicator 130 for the differential lock system 100.

According to another aspect, there is provided a differential lock system 100 comprising a controller 10 and an actuator configured to engage or disengage the differential lock 110 based on the differential lock setpoint. In this embodiment, the actuator is a valve 120. However, in other embodiments, the actuator could be of any suitable type such as an electric actuator, pneumatic actuator or hydraulic actuator.

A differential lock system 100 according to the invention is configured to determine and output the optimal setting for a differential lock 110. It provides at least the same advantages as described in detail with the controller 10.

Optionally, the valve 120 is configured as at least one of a solenoid valve, a motor driven valve or a medium driven valve.

A solenoid valve offers the advantage of rapid response times and high cycling rates due to its electromagnetic actuation mechanism. A motor-driven valve provides precise control overflow rates and positions. A medium-driven valve, on the other hand, utilizes the pressure or flow of the medium itself for actuation, offering the benefit of self-operation without the need for an external power source.

In Fig. 1, the valve 120 and the controller 10 are shown as being arranged separately on differential locks 110. However, the valve 120 and controller 10 may also be an assembly or the controller 10 may be integrated into the valve 120.

Forming a valve 120 and a controller 10 as an assembly offers the advantage of compactness and ease of installation, as it eliminates the need for separate mounting and wiring, thereby reducing the complexity of the system. Having the valve 120 and controller 10 formed separately provides flexibility in system design and maintenance, as it allows for individual replacement or upgrade of either component without disturbing the other, potentially leading to cost savings and improved system adaptability.

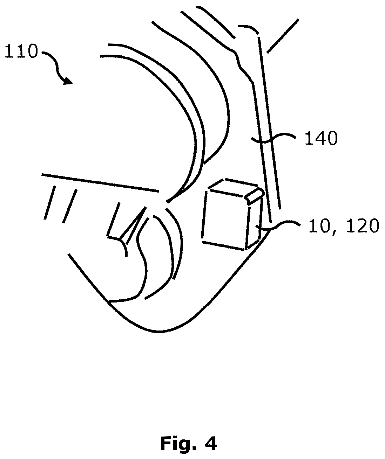

Fig. 4 illustrates the valve 120 and the controller 10 as an assembly located on a differential lock 110. As shown, the valve 120 may be connected to a housing 140 of the differential lock 110.

This arrangement minimizes the distance and potential obstructions between the valve 120 and the differential lock 110, thereby reducing the response time and enhancing the precision of the lock activation.

Optionally, the valve 120 is arranged on an outer surface of the housing 140 of the differential lock.

In addition to the minimization of the distance and potential obstructions between the valve 120 and the differential lock 110, arranging the valve 120 on the outside of the housing 140 provides the advantage of making the valve 120 accessible without opening the housing 140 of the differential lock 110, thus minimizing the cost for maintenance.

Optionally, the valve 120, preferably a solenoid valve, is arranged on a front axle differential lock 113 or a rear axle differential lock 114, wherein the valve 120 controls both the front axle differential lock 113 and the rear axle differential lock 114, preferably via air pressure.

A valve 120 that controls both the front and rear axle differential locks 113, 114, preferably via air pressure, allows for coordinated control of both axles 221, 222, optimizing vehicle performance across a wide range of driving conditions. It reduces the amount of required parts and thereby cost for installation and maintenance.

Optionally, the valve 120 is arranged on the differential lock 110.

This arrangement minimizes the distance and potential obstructions between the valve 120 and the differential lock 110, thereby reducing the response time and enhancing the precision of the activation of the differential lock 110.

Optionally, a bus 150, such as a CAN bus, is connected to the controller 10 to transmit the wheel status information.

Connecting a bus 150, such as a CAN bus, to the controller 10 controlling the differential offers the advantage of real-time and efficient transmission of wheel status information, particularly the wheel speed. This setup allows for immediate and precise adjustments to the differential lock 110 based on the wheel speed data, enhancing vehicle stability and performance. The use of the CAN bus, known for its robustness and error detection capabilities, ensures reliable data communication, contributing to the overall safety and efficiency of the vehicle's drivetrain system.

The bus 150, in particular the CAN bus, may be accessed in a read-only mode. This requires less privileges and further improves the overall safety of the communication inside the vehicle 200.

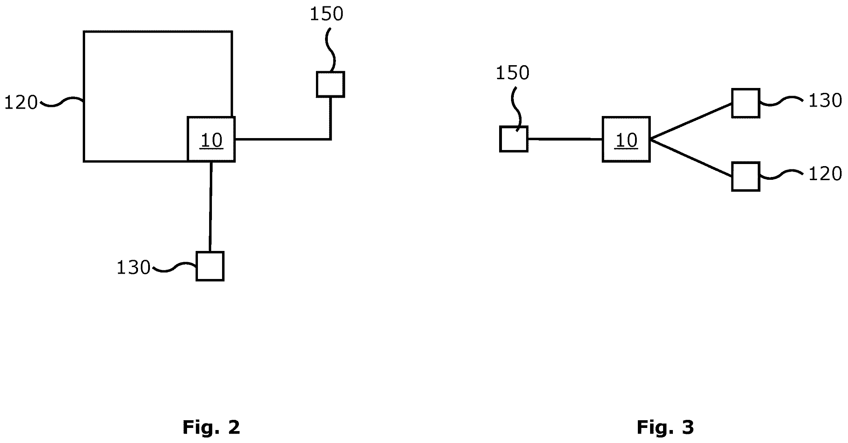

Fig. 2 and 3 illustrate two ways in which the bus 150 can be connected to the controller 10. As shown in Fig. 2, the controller 10 can be directly connected to the bus 150 and to the indicator 130. It may be provided that the controller 10 is also directly connected to the valve 120 instead of being connected to the valve 120 over the bus 150. Further, controller 10 may be integrated into the valve 120 as shown in Fig. 2.

Fig. 3 shows the controller 10 being connected over the valve 120 with the bus 150. It may further be provided that the controller 10 is connected to the bus 150 via an engine control unit (ECM). Controller 10 may also have a direct connection to the indicator 130.

According to yet another aspect, which is also illustrated in Fig. 1, there is provided an axle assembly 400 comprising the differential lock system 100 or the controller 10.

The axle assembly 400 is configured to determine and output the optimal setting for a differential lock. It provides at least the same advantages as described in detail with the controller 10 and/or the differential lock system 100.

The axle assembly 400 may further comprise at least one axle 220, in particular at least a front 221 axle or a rear axle 222. As controlling differentials becomes more complicated for a driver when multiple axles have to be monitored, it may be even more advantageous when at least two, three or four axles 220 are provided.

Axle 220 may be operatively connected to the vehicle's structure and may be configured to transmit torque from the propulsion system to the wheels 210. Axle 220, in particular the front axle 221, may also include a steering mechanism that allows the wheels 210 to pivot for directional control. Axle 220, in particular rear axle 222, while primarily focused on power delivery, may also be designed to steer the wheels 210 under certain conditions for enhanced maneuverability. The axle assembly 400 may include additional components such as suspension systems, braking systems, or any other components that enhance the functionality, safety, or comfort of the vehicle 200. The specific design, materials, and configuration of the axle assembly 400 can vary widely depending on the type of vehicle 200, the intended use, user preferences, and regulatory requirements.

According to a further aspect, there is provided a method 300 for controlling a differential lock system 110 of a vehicle 200, e.g. as shown in Fig. 5. The method 300 comprises receiving 310 a wheel status information specific to at least two wheels, determining 320, based at least on the wheel status information, a differential lock setpoint, indicating whether a differential lock should be engaged or disengaged, outputting 330 the differential lock setpoint to the differential lock system 100 to control the differential lock system 100 to engage or disengage the differential lock 110 based on the differential lock setpoint.

The method 300 can determine and output the optimal setting for a differential lock 110. It provides at least the same advantages as described in detail with the controller 10 and/or the differential lock system 100 and/or the axle assembly 400.

The method 300 may be formed as a computer-implemented method. Steps may be carried out in the order provided or any other order. Further, single steps or the method as a whole may be repeated. For example, receiving 310 and determining 320 may form a loop which is repeated more often than outputting 330. This may be used to avoid engaging or disengage the differential lock 110 out of an optimal condition of performance and safety.

The method 300 may further comprise outputting 335 an engine brake or master clutch setpoint.

Controlling the engine braking or master clutch along with the differential may improve the optimal power and brake distribution on the wheels 210, resulting in an enhanced stability and control of the vehicle 200.

Optionally, the engine brake or master clutch setpoint is at least based on the vehicle status information.

The invention has been described above with reference to one or more specific embodiments. However, the description is not exhaustive, and the present invention is not limited to the embodiments described. Various changes and modifications can be made without departing from the scope of the invention as defined in the claims. Clauses:

A controller for controlling a differential lock system of a vehicle with a plurality of wheels, the controller comprising one or more processors collectively configured to:
receive a wheel status information specific to at least two wheels,
determine, based at least on the wheel status information, a differential lock setpoint, indicating whether a differential lock should be engaged or disengaged,
output the differential lock setpoint to the differential lock system to control the differential lock system to engage or disengage the differential lock based on the differential lock setpoint.

Controller according to clause 1,
wherein the wheel status information comprises a wheel speed and/or determining the differential lock setpoint comprises comparing the speed of two wheels.

Controller according to clause 1,
wherein the one or more processors are collectively configured to receive vehicle status information and determining the differential lock setpoint is based at least on the wheel status information and the vehicle status information.

Controller according to clause 3,
wherein the vehicle status information comprises at least a vehicle speed, a steering angle, an inclination, a brake status or a clutch status.

Controller according to clause 1,
wherein the one or more processors are collectively configured to receive a status of the differential lock system, wherein the status of the differential lock system at least comprises whether the differential lock is engaged or disengaged.

Controller according to clause 1,
wherein the one or more processors are collectively configured to output an engine brake setpoint.

Controller according to clause 6,
wherein the engine brake setpoint is at least based on the vehicle status information.

Controller according to any of the preceding clauses,
wherein the one or more processors are further collectively configured to output the differential lock setpoint to an indicator.

A differential lock system comprising the controller of clause 1 and an actuator configured to engage or disengage the differential lock based on the differential lock setpoint.

Differential lock system according to clause 9,
wherein the actuator is configured as at least one of a solenoid valve, a motor driven valve or a medium driven valve.

Differential lock system according to clause 9,
wherein the differential lock is at least an inter-axle differential lock or an axle differential lock.

Differential lock system according to clause 9,
wherein the actuator and the controller are formed as an assembly.

Differential lock system according to clause 9,
wherein the actuator is arranged on the differential lock.

Differential lock system according to clause 9,
wherein the actuator is connected to a housing of the differential lock.

Differential lock system according to clause 9,
wherein the actuator is arranged on an outer surface of the housing of the differential lock.

Differential lock system according to clause 9,
wherein the actuator is arranged on a front axle differential lock or a rear axle differential lock, wherein the actuator controls both the front axle differential lock and the rear axle differential lock, optionally via air pressure.

Differential lock system according to clause 9,
wherein a bus, such as a CAN bus, is connected to the controller to transmit the wheel status information.

An axle assembly comprising at least a controller according to clause 1.

An axle assembly comprising at least a differential lock system according to clause 9.

## Claims

1. A controller for controlling a differential lock system of a vehicle with a plurality of wheels, the controller comprising one or more processors collectively configured to:
receive a wheel status information specific to at least two wheels,
determine, based at least on the wheel status information, a differential lock setpoint, indicating whether a differential lock should be engaged or disengaged,
output the differential lock setpoint to the differential lock system to control the differential lock system to engage or disengage the differential lock based on the differential lock setpoint.

2. Controller according to claim 1,
wherein the wheel status information comprises a wheel speed and/or determining the differential lock setpoint comprises comparing the speed of two wheels.

3. Controller according to claim 1 or claim 2,
wherein the one or more processors are collectively configured to receive vehicle status information and determining the differential lock setpoint is based at least on the wheel status information and the vehicle status information, optionally
wherein the vehicle status information comprises at least a vehicle speed, a steering angle, an inclination, a brake status or a clutch status.

4. Controller according to any previous claim,
wherein the one or more processors are collectively configured to receive a status of the differential lock system, wherein the status of the differential lock system at least comprises whether the differential lock is engaged or disengaged.

5. Controller according to any previous claim,
wherein the one or more processors are collectively configured to output an engine brake setpoint,
optionally wherein the engine brake setpoint is at least based on the vehicle status information.

6. Controller according to any of the preceding claims,
wherein the one or more processors are further collectively configured to output the differential lock setpoint to an indicator.

7. A differential lock system comprising the controller of any previous claim and an actuator configured to engage or disengage the differential lock based on the differential lock setpoint, optionally wherein the actuator and the controller are formed as an assembly.

8. Differential lock system according to claim 7,
wherein the actuator is configured as at least one of a solenoid valve, a motor driven valve or a medium driven valve.

9. Differential lock system according to claim 7 or claim 8,
wherein the differential lock is at least an inter-axle differential lock or an axle differential lock.

10. Differential lock system according to claim 7,
wherein the actuator is arranged on the differential lock, optionally wherein the actuator is arranged on an outer surface of the housing of the differential lock.

11. Differential lock system according to claim 7,
wherein the actuator is connected to a housing of the differential lock.

12. Differential lock system according to claim 7,
wherein the actuator is arranged on a front axle differential lock or a rear axle differential lock, wherein the actuator controls both the front axle differential lock and the rear axle differential lock, optionally via air pressure.

13. Differential lock system according to claim 7,
wherein a bus, such as a CAN bus, is connected to the controller to transmit the wheel status information.

14. An axle assembly comprising at least a controller according to any of claims 1 to 6.

15. An axle assembly comprising at least a differential lock system according to any of claims 7 to 13.
